# EUROPEAN PATENT APPLICATION

(11) **EP 1 921 806 A1**
(43) Date of publication of application: **14.05.2008**
(21) Application number: 06020119.1
(22) Date of filing: 26.09.2006
(51) Int. Cl.: H04L 12/56

(54) **Method for managing network resource usage**

(71) Applicant: Nokia Siemens Networks GmbH & Co. KG, 81541 München (DE)
(72) Inventor: Pereira, Goncalo, Amadora (PT)

(57) **Abstract**

A method for managing network resource usage is proposed, whereby
- a first network element (GN1) receives a network resource reservation request for data transmission,
- the first network element identifies, based on a network topology knowledge base, at least one further network element (GN2) in the path to the data transmission's destination that shares a network resource (SL) for handling the data transmission with the first network element,
- a notification is sent from the first network element to the at least one further network element containing the amount of resources to be allocated for the request,
- the at least one further network element updates its resource allocation distribution for the requests it is handling

## Description

A method for managing network resource usage is described. In particular, a method for managing network resource usage, wherein network elements with admission control function are employed, is described.

US 2004-0158644 describes a method for distributed admission control to optimize the allocation of network resources.

One objective to be achieved lies in providing a method that allows optimal network performance when additional traffic enters the network. In particular, an objective to be achieved lies in providing a method for managing network traffic such that scalability of the network is achieved.

Yet another objective to be achieved lies in providing a method that reduces the number of network bottlenecks or reduces the severity of network bottlenecks for a given amount of network traffic.

Another objective to be achieved lies in providing a method whereby new traffic flows admitted to a network do not compromise traffic flows that are already running.

A method for a managing network resource usage is proposed, whereby a first network element receives a network resource usage request for data transmission. The first network element then identifies, based on a network topology knowledge base, at least one further network element that shares responsibility for handling the data transmission with the first network element. The further network element is considered to be in the path to the data's destination, as given, for example, by the address in a header of the respective data packet.

A notification, containing data corresponding to the amount of resources to be allocated for the request, is sent from the first network element to the said at least one further network element. Based on the notification, the latter can then update its resource allocation distribution for the requests it is handling, provided it has enough resources to take up the further request.

According to one implementation of the method, the first network element comprises an admission control function with the power to allocate network resources to the request. The first network element can be called an admission resource controller.

The further network elements preferably also comprise admission control functions of the above named type.

The first and further network elements send notifications to each other for updating the shared resources statuses as described, however the actual path that is followed by these notifications can be different depending on whether the network elements, i.e. resource controllers, are co-located or not. According to one implementation of the method, co-located network elements have a direct communication between them, for example via a regular Ethernet LAN. For non-co-located network elements, the notifications may be transmitted over a network comprising more network elements such as switches and routers that pass this information along.

The method advantageously enables scalability of a network because each network element may communicate, via the proposed notification, with another in the path to the data's destination, such that each network element is aware of the resource usage of another network element. In this manner, bandwidth or other network resource usage for a network service can be distributed in a manner preventing network bottlenecks at and for each network element in the service's path. The network service is considered to comprise whatever data or information was requested.
In the context of the proposed method(s), the following terms are considered to include corresponding meanings.

A network is considered to comprise a communication network suited to transmitting data through any form of a channel, such as a wireless communications channel or a fixed-line communications channel. The data transmitted may comprise multimedia data, voice data (voice call) and / or electronic information.

Multimedia data is considered to comprise television, video, movie and / or graphics data. Streaming data is considered to be included therein. Electronic data is considered to comprise facsimile, e-mail and/or internet data. Combinations of multimedia and electronic data are also taken into account. The multimedia and/or electronic data may be transmitted through a variety of protocols, such as IP.

A network element is considered to comprise an element that is capable of handling data inputted and / or transmitted through a network. This data handling may include transmission over a fixed-line or wireless channel, processing of the data, routing, switching, storing, and queuing. Thus, examples of suitable network elements are network access points, servers, such as application and / or signalling servers, workstations, network elements with admission controlling function also known as controllers, routers, switches, network cards, links and ports and / or a combination of these.

Experimental results have confirmed that the proposed method is particularly useful when VoIP (Voice over IP) or VoD (Video on Demand) data is being handled in a network. As requests for such data, especially VoD, may suddenly increase network traffic depending on an event such as a news event or the availability of a popular network service, effective network resource usage as enabled by the method is clearly demonstrable. In this case effective network resource usage is in particular understood as the ability to provide a network service with QoS (Quality of Service) parameters that were requested at service creation. This would not be possible if an arbitrary number of flows were to be allowed into the network because the quality of those are already running would be degraded.

The network resource usage request may include a reservation request for a network service. This reservation request may be dependent on a desired or needed QoS level and may thus include desired bandwidth allocation above a minimum level.

According to one implementation of the method, the updated resource allocation for the request includes updated bandwidth allocation. Thus, depending on the notification and the information concerning the recommended or required amount of bandwidth for the requested network service contained therein, the further network element can redistribute its bandwidth allocation taking into account future handling of the additional requested service. This can be allowed in the case where bandwidth is available to a degree satisfying a QoS agreement. Where a given network element cannot provide sufficient resources, the network traffic for the service is directed to a network element that has sufficient resources available to guarantee the QoS.

According to another implementation of the method, the updated resource allocation includes other resources such as memory, or the usage of additional network elements, such as alternative links, to which the requested network service could be connected. The links may include channels suited to high speed data transfer such as cable or fibre-optic channels, bypass or backup channels. In this case, the first and / or further network elements handling the traffic may advantageously implement some further processing that changes configurations at the network element transport level.

The method of redistributing network resources based on a network resource usage request can be considered a part of a more general admission control procedure. Admission control is interpreted as being the admission or denial of new data flows in a network so that existing data flows are not compromised by new flows admitted into the network.

According to another implementation of the method, the network resource usage request is sent to the first network element from an application server. The application server can take the form of a signalling manager on which, for example, a Softswitch working together with an admission control signalling program is mounted. The application server may have received the request from a fixed-line or mobile customer end-user device. Preferably, a DSLAM switch is logically located between the end-user device and the application server.

The network elements, preferably network admission controllers, communicating with each other via notifications in order to improve network resource allocation may belong to different subnetworks, in particular to different subnetworks within a network of a single domain. Preferably, at least one network element, i.e. a network resource controller suited to allocating a network resource for a network resource request is assigned to a respective subnetwork.

A subnetwork may comprise a plurality of switches that direct traffic towards a common node, such as a router. The router may then direct the traffic to another network belonging, for example, to another domain. A suitable router for this purpose is a BRAS. According to another implementation of the method particularly suited to handling VoIP data transfers (calls), a router at the edge of an SBC (Session Border Controller) access network is employed for transferring the data. The router thereby preferably performs NAT traversal for signalling (Session Initiation Protocol) streams and for example for law enforcement recordings of calls.

Subnetworks may share network resources, such as a resource carried by common network element such as a link. As the network elements such as the resource controllers are provided, via the notification, with information concerning of resource usage by every other network element responsible for handling the request, each network elements sees the resource usage of the shared resource in a consistent way. The bandwidth allocation for requests handled by a network element can thus be made dependent on the usage of the shared network resource.

Other forms of shared network resources are, for example, available memory for storing transmitted data, such as in a queue. A plurality of network elements handling the same request demanding memory allocation can then look into a another network element, such as a router or a BRAS and ensure that the available memory in that network element is decremented by a value for the purpose of handling the new network service request.

According to a preferred implementation of the method, a network resource management system determines the logical boundaries between different subnetworks within a domain. This it preferably does by choosing boundaries so that the subnetworks share the least number of resources. Based on this chosen logical splitting up of the network, the network resource management system communicates the assignment to a network element. The network element's assignment to a specific subnetwork is then loaded or refreshed in its database.

The network management system may comprise or be connected to a network topology knowledge base. This may be, according to one preferred implementation, provided by a network analyser with an auto-discovery feature that obtains an overview of the network elements used in the network. Determining the logical boundaries between the subnetworks may then be carried out depending on the given network topology.

Particularly good network scalability is achieved when the network topology knowledge base includes at least one network element added most recently to the network. All available network elements in the network or subnetworks can then be notified of the existence of the added network element. Network resource allocation will then take the added network resources that accompany that added network element or network resource-providing hardware into account. Two approaches may be applied:
- the static approach wherein an operator or network analyser knows a network element has been added to the network and adds its entry to the network resource management system' database. This can be automated by activation of a signalling program upon connecting the network element to the network.
- the dynamic approach in which the added network element is discovered and automatically added to a network resource manager's database.
According to a preferred implementation of the method, at least one further network element notified by the first network element stores the notification of the request for network resource usage in a queue. The queue may contain further requests received at another time from the first network element or from another network element. The implementation is advantageously furthered when the at least one further network element updates its resource allocation in the order of notifications contained in the queue. The notifications may contain indications of priority, in the form, for example, of a flag, such that the updates for resource allocation may also be carried out in the order of notification priority. Resource allocation in the order of notification priority can be useful for handling emergency requests such as emergency 911 calls. In this case, other network services being handled by a network element can be dropped entirely, given less resources or re-routed to another network or subnetwork.

The proposed method enables scalability within one domain, or in a complementary manner within a plurality of domains connected to each other, for example by means of a router such as a BRAS. As scalability is considered to be the property of a network able to handle a growing amount of work or to be readily enlarged, a network whose performance improves after adding hardware proportionally to the capacity added is considered to be scalable.

If the network topology has changed, for example by the addition of a new network element, the new topology merely has to be reloaded or passed on from the network resource manager NRM to controllers of a given domain. The method can then be carried out without any modification. The method is thus independent of the architecture of the network or of each of the controllers.

If traffic passing through a network can no longer be handled by the network elements in that network due to limited network resources, only new network elements need to be added and the method can be carried out without further modification.

Thus, the approach is not restricted to two network elements with admission control function; it can be generalised to n such network elements.

The difference between insufficient network resources that determine that no more network traffic can be admitted and the network traffic load sharing between network elements such as resource controllers is distinguished as follows.

In the first case only one network element is provided that receives one request and is not overloaded. Nevertheless, some network elements such as links may have failed such that the available bandwidth in the network is very small, leading to limited resource availability for a few flows. Most flows will be refused by the respective network element comprising admission controlling function.

The second case addresses the situation when a network element receives a network service request from a signalling server. The network element verifies its internal data structures, for example by going through all the links that the request will be using, to see if network resources are still available for the requested network service. This process can be done in near real time while the requesting customer is waiting for the network connection (or call) to be established because the processing of the requests and the later handling of the data traffic is done in parallel by different network elements. The less shared resources there are, the more efficient this process becomes.

The described methods are further elaborated upon by means of the following drawing and examples:

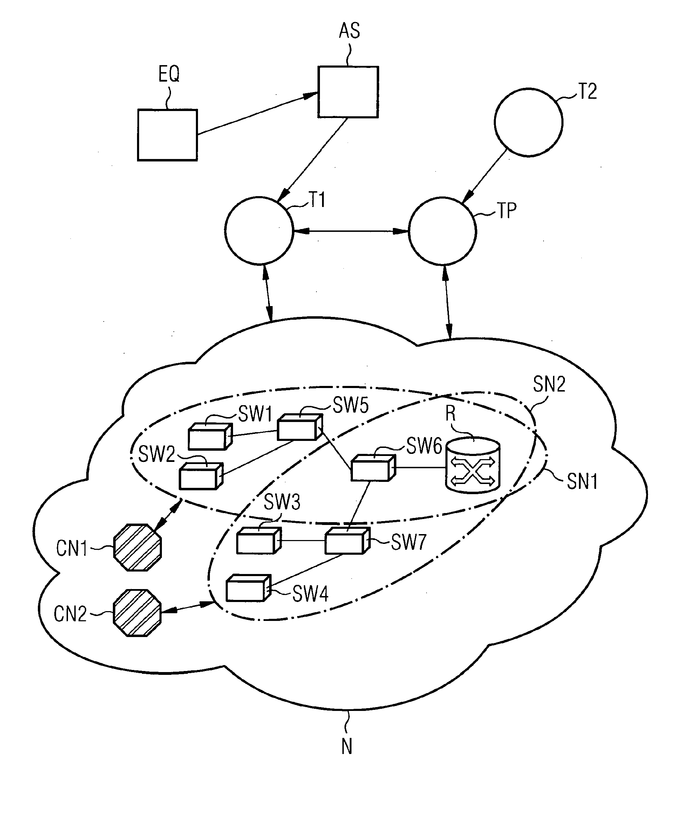

- Drawing 1: shows a network comprising a plurality of sub-networks, each of which is assigned to an admission controller.

Drawing 1 shows a transport network N of one domain connected to a core network, whereby a plurality of network elements and / or access terminals EQ, AS, CN1., CN2 and NRM are connected the transport or access network N. The depiction of these network elements is schematic. The core network can be considered as being part of another domain, which in turn may be connected to yet another domain. The further domains could, for example, contain the connection to a receiving party for data transfer, such as a receiving party for a VoIP call. The different domains could also be involved in a call, for example for video conferencing.

The network element EQ stands for an end-user device such as a computer terminal connectable to the network. The end-user device may also be a mobile device such as a cellular phone or a laptop computer with wireless access to the network. The end-user device may comprise a VoIP, VoD and / or Internet Browser program. The request for a network service may stem from running one of these programs.

The network element AS stands for an application server which in the context of admission control unfolds its function primarily as a signalling manager. The signalling manager AS transmits a request for a network service from the end-user device EQ to a controller CN1 and / or CN2. The request obtained from the end-user device preferably includes a destination IP and port addresses along with an indication of QoS (Quality of Service). This information can, however, be inserted into the request from the end-user device by the signalling manager itself or by another network element to which the end-user device is connected.

The controllers CN1 and CN2 are each connected to the transport network N and also to a network resource manager NRM.

The network resource manager NRM holds a network topology knowledge base. Based on the logical arrangement of the controllers CN1 and CN2, the network resource manager can assign each one of them a subnetwork to be responsible for. This process is discussed further below.

The transport network N is subdivided into a plurality of subnetworks SN1 and SN2, each of which is connected to an admission controller CN1, CN2. Each subnetwork comprises a plurality of switches SW1 to SW7 along with links connecting them.

One link SL is shared between both subnetworks SN1, SN2 and leads to a BRAS R that has a connection to a core network. The shared link SL is an example of a shared network resource, as the bandwidth than can be carried by the link must be shared by network traffic admitted by both controllers CN1 and CN2.

The network resource manager NRM holds a list with information about which customers must be under the same controller and logically partitions the network N so that the number of shared network resources, such as the link SL, is kept to a minimum. The information regarding the responsibility of a controller for certain customers is transmitted from the NRM to each of the controllers CN1 and CN2, whereby the information can be split up into respective areas of assignment and sent only to the controllers having those areas or that area of assignment. The identification of controllers sharing a network element is also done by the resource manager and passed to the controllers. This can be done after running a suitable network splitting program and before assigning the subnetworks to different controllers. The obtained subnetwork representation is loaded in each respective controller.

If there are no shared resources amongst the subnetworks in the network, then each controller handles requests related from the customers it is responsible for on its own. No overlap of resource handling exists, as the subnetworks handled by each controller are disjoint.

Network service requests are initially received at the signalling server AS. Based on customer identification, the signalling server AS contacts the appropriate controller CN1 or CN2 or the signalling server always contacts one controller CN1 or CN2 which is responsible for the routing of requests, based, for example, on the customer identifier contained in the data packet received from the end-user device EQ. Preferably, the controller that is responsible for routing the requests relies on more powerful hardware. A variant of this scheme can also be implemented, wherein one controller merely routes requests to other controllers, which then implement the task of checking the resources available.

The service request preferably includes the source and destination IP address, the source and destination port along with the used transport protocol, for example RTP for VoIP and the amount of bandwidth. The NRM will translate this into a physical path (sequence of network elements) across the network, which allows it to determine the resources whose usage needs to be considered. The means for mapping from the service request to the network topology can include mapping between an IP address assigned to equipment at customer premises and the physical port in the network elements, for example ports in a DSLAM or in a switch, that customer premise equipment is connected to.

The mapping of IP address to physical ports is preferably done as follows. DSLAM has a DHCP relay agent that receives requests for assignment of IP address each time an end-user equipment EQ that requires one is connected to the network The DSLAM then obtains this address from a DHCP server and when it does so, it returns it to the end user equipment EQ. At the same time, since the DSLAM knows which physical port has received this request, it shall send a notification with a mapping of the type <DSLAM physical port, IP address> to the network resource controller CN1, CN2, which keeps it in memory. The DSLAM physical port is also provided by the NRM to the network resource controller CN1, CN2 as part of the topology. Then the controller uses the information received from the DHCP relay agent in the DSLAM to do the mapping.

Upon reception of a new request, the controller CN1 and / or CN2 determines all the resources that must be updated, such as points in the network or links whose bandwidth should be decremented. Bottlenecks in the path of the data flow are identified at this point. For each shared resource, the controller CN1, CN2 knows which other controllers are responsible for handling the same request and using the same resource in order to handle it. The controller receiving the request updates its own representation regarding the new status of each bottleneck, for example in what concerns the occupancy percentage of the shared link SL. If the bottleneck is part of a resource whose responsibility is shared, the controller also has the information regarding the identification of the other controllers that also share responsibility for this shared link.

Prior to updating its own resource usage distribution, a notification is sent by the controller that is processing the request to each of the controllers that are also responsible for it. This notification includes the resource identifier and its new status. The status may for example be the amount of bandwidth that is allocated to the request.

Each of the controllers that shares responsibility for the resource receives the notification. The notification is stored in a queue. If the controller is at that point processing a network resource usage reservation request, the notifications are not retrieved from the queue. However, as soon as the processing of the current reservation request is finished, the queue is decremented or emptied and the status of the shared resources can be updated.

The method allows each controller to see the shared link status in a consistent manner.

After granting or denying access to a given session based on the availability of necessary network resource for the requested network service, the controller CN1, CN2 checks a notification queue for information about bandwidth updates received from the other controllers.

The proposed methods can be carried out every time a network service is requested.

### List of Abbreviations

- EQ: end-user equipment
- AS: application server
- CN1: first admission controller
- CN2: second admission controller
- NRM: network resource manager
- SN1: first subnetwork
- SN2: second subnetwork
- SW1 to SW7: switches in the subnetworks
- SL: shared link
- N: transport network
- R: BRAS router

## Claims

1. Method for managing network resource usage, whereby
- a first network element (CN1) receives a network resource usage request for data transmission,
- the first network element identifies, based on a network topology knowledge base, at least one further network element (CN2) in the path to the data transmission's destination that shares a network resource (SL) for handling the data transmission with the first network element,
- a notification is sent from the first network element to the at least one further network element containing the amount of resources to be allocated for the request,
- the at least one further network element updates its resource allocation distribution for the requests it is handling.

2. Method according to claim 1, whereby the first (CN1) and further network elements (CN2) comprise network resource controllers.

3. Method according to one of the claims 1 or 2, whereby the request includes at least one of the following: the source and destination IP address, the source and destination port, the protocol used.

4. Method according to one of claims 1 or 2, whereby the shared network resource (SL) comprises one of the following: switch (SW1, SW2 , SW3, SW4, SW5 , SW6, SW7), router (R), link (SL), link connected to a core network (SL), link connected to a BRAS (SL).

5. Method according to claim 4, wherein the shared network resource comprises memory storage.

6. Method according to one of the preceding claims, whereby the updated resource allocation for the request includes updated bandwidth allocation.

7. Method according to one of the preceding claims, whereby the updated resource allocation for the request includes updated memory allocation.

8. Method according to one of the preceding claims, whereby the first (CN1) and further network elements (CN2) comprise at least one of the following: routers, switches, memory storage means, data packet queuing means.

9. Method according to one of the preceding claims, whereby the network resource reservation request is sent from a signalling manager (AS) to the first network element (CN1).

10. Method according to one of the preceding claims, whereby a network resource usage request is sent from a customer end-user device (EQ) to a signalling manager (AS).

11. Method according to one of the preceding claims, whereby the network elements (CN1, CN2) are assigned to different subnetworks (SN1, SN2).

12. Method according to claim 11, whereby a network management system (NRM) determines the logical boundaries between the different subnetworks (SN1, SN2).

13. Method according to claim 12, whereby the network management system (NRM) chooses the logical boundaries in a manner such that the subnetworks (SN1, SN2) share the least number of resources.

14. Method according to one of the preceding claims, whereby the at least one further network element (CN2) stores the notification in a queue.

15. Method according to claim 14, whereby the at least one further network element (CN2) updates resource allocation in the order of notifications contained in the queue.

16. Method according to one of the preceding claims, whereby the network topology knowledge base is transmitted to the network elements (CN1, CN2) from a network resource manager (NRM).

17. Method according to one of the preceding claims, whereby the network topology knowledge base includes at least one network element (CN1, CN2) added most recently to the network.

18. Method according to claim 17, whereby the first network element (CN1) is a network element added most recently to the network.

19. Method according to claim 17, whereby the at least one further network element (CN2) is a network element added most recently to the network.
